# EUROPÄISCHE PATENTSCHRIFT

(11) **EP 1 726 047 B1**
(45) Veröffentlichungstag und Bekanntmachung des Hinweises auf die Patenterteilung: **22.08.2007**
(21) Anmeldenummer: 05701634.7
(22) Anmeldetag: 01.02.2005
(51) Int. Cl.: H01L 33/00

(54) **LICHTQUELLE FÜR BILDERZEUGUNGSEINHEIT**
LIGHT SOURCE FOR AN IMAGE-GENERATING UNIT
SOURCE LUMINEUSE POUR UNITE DE GENERATION D'IMAGES

(30) Priorität: 18.03.2004 DE 102004013680
(43) Veröffentlichungstag der Anmeldung: 29.11.2006
(73) Patentinhaber: SIEMENS AKTIENGESELLSCHAFT, 80333 München (DE)
(72) Erfinder: BREINICH, Herbert, 65239 Hochheim (DE); HOHMANN, Kai, 64832 Babenhausen (DE); JAKOBY, Oliver, 63150 Heusenstamm (DE); NOLL, Heinrich, 64823 Gross-Umstadt (DE)
(86) Internationale Anmeldenummer: PCT/EP2005/050427
(87) Internationale Veröffentlichungsnummer: WO 2005/091382

(56) Entgegenhaltungen:
- DE-A1- 19 858 591
- GB-A- 801 325
- US-A1- 2003 189 830
- PATENT ABSTRACTS OF JAPAN Bd. 2002, Nr. 07, 3. Juli 2002 (2002-07-03) -& JP 2002 094122 A (MATSUSHITA ELECTRIC WORKS LTD), 29. März 2002 (2002-03-29)
- HAM S J ET AL: "Thermal deformations of CSP assembly during temperature cycling and power cycling" ELECTRONIC MATERIALS AND PACKAGING, 2000. (EMAP 2000). INTERNATIONAL SYMPOSIUM ON NOV. 30 - DEC. 2, 2000, PISCATAWAY, NJ, USA,IEEE, 30. November 2000 (2000-11-30), Seiten 350-357, XP010532432 ISBN: 0-7803-6654-9

## Beschreibung

Die Erfindung betrifft eine Lichtquelle mit mindestens einem Leuchtmodul und einem Ansteuermodul mit einer Ansteuerelektronik. Außerdem ist eine Bilderzeugungseinheit für ein Head-Up-Display mit einer erfindungsgemäßen Lichtquelle Gegenstand der Erfindung.

Lichtquellen und Bilderzeugungseinheiten der eingangs genannten Art sind bereits aus der Deutschen Offenlegungsschrift DE 198 58 591 A1 bekannt. Die hohen Anforderungen, insbesondere im Falle eines hohen Fremdlichtanteiles aus der Umgebung, an die Helligkeit der für ein Head-Up-Display zu verwendenden Lichtquelle bei gleichzeitig nur kleinem zur Verfügung stehenden Bauraum stellen die Entwicklung andauernd vor eine große Herausforderung. Die mittels Leuchtmitteln erzeugbare Helligkeit ist entweder so gering, dass eine Vielzahl von Leuchtmitteln, beispielsweise normale Halbleiterleuchtdioden nötig werden, oder das einzelne Leuchtmittel eine so hohe als Wärme abzuführende Verlustleistung aufweist, dass der Aufwand und der Raumbedarf für eine Kühlung den gegebenen wirtschaftlichen und technischen Randbedingungen nicht mehr entspricht.

Ausgehend von den Problemen des Standes der Technik liegt der Erfindung die Aufgabe zugrunde, eine Lichtquelle zu schaffen, welche bei nur geringem Raumbedarf eine besonders hohe Helligkeit erzeugen kann, wobei die Anordnung auch den Anforderungen an die Serientauglichkeit bei der Verwendung für ein Head-Up-Display im Automotive-Bereich gerecht werden soll.

Zur Lösung des Problems wird erfindungsgemäß eine Lichtquelle der eingangs genannten Art vorgeschlagen, bei welcher das Leuchtmodul und das Ansteuermodul jeweils ein eigenes Trägerelement aufweisen, nämlich das Leuchtmodul ein erstes Trägerelement und das Ansteuermodul ein zweites Trägerelement aufweist und das Leuchtmodul und das Ansteuermodul mit einem gemeinsamen Träger in zueinander befestigender Verbindung stehen, wobei das Leuchtmodul mit dem Ansteuermodul mittels elektrischer erster Leitungen in Verbindung steht, welche derart ausgebildet sind, dass thermisch verursachte Relativbewegungen zwischen dem Ansteuermodul und dem Leuchtmodul von der Verformung der Leitungen zerstörungsfrei aufgenommen werden.

Ein entscheidender Vorteil liegt in dem modularen Aufbau der Lichtquelle, welcher je nach Anforderungen an die Helligkeit zusätzliche Leuchtmodule zu einem Ansteuermodul zuzuordnen zulässt. Dieser modulare Aufbau erfüllt hohe Anforderungen an die Standardisierung, was die Kosten der Serienfertigung eklatant reduziert.

Die Zuordnung von Trägerelementen zu dem Leuchtmodul bzw. dem Ansteuermodul erhöht zudem die Handhabbarkeit dieser Bauelemente im Rahmen der Montage. Besondere Vorteile bringt außerdem die elektrische Verbindung zwischen den Ansteuermodul und dem Leuchtmodul mittels der ersten Leitung mit sich, die derart ausgebildet ist, dass sie thermisch verursachte Relativbewegungen zerstörungsfrei übersteht. Hierzu ist es insbesondere sinnvoll, diese Leitungen bogenförmig anzuordnen, so dass sich in Abhängigkeit von der Relativbewegung die Geometrie des Bogens verändert, was verhältnismäßig geringe Anforderungen an die Verformbarkeit des für die erste Leitung verwendeten Werkstoffes stellt. Die mechanische Entkopplung der erfindungsgemäß modularen Ausbildung der Lichtquelle verringert insbesondere die Höhe der auftretenden thermisch verursachten Spannungen, insbesondere während transienter thermischer Vorgänge, was den Bereich höherer Temperaturgradienten und Temperaturtransienten sowie höherer Temperaturniveaus eröffnet. Die höheren zulässigen Temperaturen verringern gleichzeitig die Anforderungen an die Kühlung und ermöglichen eine raumsparendere Bauweise.

Eine vorteilhafte Weiterbildung der Erfindung sieht vor, dass die elektrischen ersten Leitungen zur Verbindung des Leuchtmoduls mit dem Ansteuermodul als Bonddrähte ausgebildet sind. Erst dadurch, dass die erfindungsgemäße Befestigung des Leuchtmoduls zu dem Ansteuermodul mittels eines gemeinsamen Trägers erfolgt, können Bonddrähte an dieser Stelle verwendet werden. Hierzu ist es zweckmäßig, die entsprechenden Kontakte der Ansteuerelektronik bzw. des Leuchtmoduls mit bondbaren Oberflächen zu versehen, beispielsweise auf Gold-NickelBasis, Silber-Platin-Basis oder Silber-Palladium-Basis. Mit Wire-Pull-Tests wurden hervorragende Ergebnisse bei den zu ertragenden Temperaturen erzielt. Zum mechanischen Schutz dieser Verbindung kann der entsprechende Bereich mittels Kunststoff abgedeckt werden, zum Beispiel mittels eines Harzes oder SIL-Gels.

Eine hohe Lebensdauer bei gleichzeitig konstanter Leuchtkraft weist die Lichtquelle auf, wenn das Leuchtmodul mindestens einen Halbleiterchip aufweist, der auf einer Leiterschicht in elektrisch leitender Verbindung mit der Leiterschicht angeordnet ist. Der Durchmesser des Halbleiterchips kann hierbei bis zu 1 mm betragen, wobei sich gewünschte Größenordnungen der Leuchtleistung bei einem Diagonalmaß von etwa 0,5 mm erzielen lassen. Sehr gute Ergebnisse hinsichtlich der Helligkeit bei akzeptabler Wärmeentwicklung lassen sich mit einer flächigen Ausdehnung der einzelnen Halbleitchips von 0,5 m^2 bis 1,5 m^2, insbesondere bei etwa 1m^2 erzielen, wobei die Leistungsaufnahme bei einem 1 m^2 ca. 500 mW beträgt.

Kostengünstig kann die Befestigung des Leuchtmoduls und/oder des Ansteuermoduls an dem Träger mittels Klebstoff erfolgen.

Die Vorzüge des modularen erfindungsgemäßen Aufbaus kommen voll zur Geltung, wenn einem Ansteuermodul mehrere Leuchtmodule zugeordnet sind.

Die von dem Werkstoff der einzelnen Bauelemente gesetzten Grenzen lassen sich noch besser ausnutzen, wenn an dem Ansteuermodul und/oder an dem Leuchtmodul ein Temperatursensor angeordnet ist. Eine gute Lösung ist hierbei die Verbindung von Temperatursensoren mit dem Leuchtmodul, was an dieser Hauptwärmequelle, insbesondere bei transienten Temperaturverläufen, maximale Leistungen ermöglicht. Zur Reduzierung der Kosten für die regelmäßig in einer Mehrzahl an das Ansteuermodul anzukoppelnden Leuchtmodule kann der Temperatursensor auch an das eine erhebliche Verlustleistung aufweisende Ansteuermodul thermisch angekoppelt werden. Höchste Ausnutzung der Werkstoffe ergibt sich, wenn sowohl an den Leuchtmodulen als auch an dem Ansteuermodul eine entsprechende Temperatursensorik vorgesehen ist.

Auf Grund des erfindungsgemäßen modularen Aufbaus sind Leistungsaufnahmen von mindestens 0,5 Watt pro Halbleiterchip möglich und zur Erzielung der gewünschten Helligkeit zweckmäßig.

Um die thermische Belastbarkeit der Leuchtmodule weiter zu erhöhen, kann die Leiterschicht auf einem Trägerelement aus Keramik aufgebracht sein. Diese Keramik kann sinnvoll als wärmeleitender Hybrid, insbesondere als Aluminiumoxidkeramik (Al₂O₃) ausgebildet sein. Gute Ergebnisse bei der Abführung der Verlustwärme ergeben sich, wenn die Keramik einen Wärmeleitkoeffizient von mindestens 5 K/W aufweist, wobei sie zweckmäßig als elektrischer Isolator ausgebildet ist. Obgleich die Keramik als erstes Trägerelement ausgebildet sein kann, ist es für die Handhabbarkeit sinnvoll, die Keramik als drittes Trägerelement auszubilden und an dem ersten Trägerelement in einem Zwischenschritt der Fertigung zu befestigen.

Um den hohen thermischen Belastungen standzuhalten und dennoch die Anforderungen an die elektrischen Leitungen zu erfüllen, ist es sinnvoll, wenn die Leiterschicht zumindest teilweise aus einem Gemisch umfassend Silber und Platin besteht. Hierbei kann die Leiterschicht Leiterbahnen umfassen, welche mit der von der Leiterschicht fort weisenden Seite des Halbleiterchips mittels mindestens einer zweiten als Bonddraht ausgebildeten elektrischen Leitung in Verbindung stehen.

Mit Vorteil kann die elektrische Anbindung der Leiterschicht mittels einer elektrischen Leitung an zu dem Ansteuermodul führenden Leitungen, die vorzugsweise Bestandteil einer Leiterplatte sind, erfolgen, die als Bonddrähte ausgebildet sind, so dass die hohen hier anstehenden Temperaturen dauerhaft ertragen werden können. Die Anbindung ist zweckmäßig mittels einer Kunststoffvergussmasse gegen äußere chemische und mechanische Einflüsse geschützt.

Besonders flexibel ansteuerbar hinsichtlich der Helligkeit und des Farbortes wird die Lichtquelle, wenn das Leuchtmodul mehrere Halbleiterchips umfasst, und die Leiterschicht sowie die Verbindung der Leiterschicht zu den Halbleiterchips derart ausgebildet ist, dass mindestens zwei Halbleiterchips mittels der Leiterbahnen voneinander unabhängig mit elektrischer Spannung beaufschlagbar sind. Auf diese Weise sind besonders hohe Dimmraten und eine besonders hohe Flexibilität in der Wahl des Farbortes möglich.

Eine hervorragende Leitfähigkeit bei hohen Betriebstemperaturen kann erreicht werden, wenn die Leiterschicht zumindest teilweise aus einem Gemisch umfassend Silber und Platin besteht. Während der Herstellung ist dieses Gemisch zumindest zeitweise pastös und wird vorzugsweise mit Siliziumdioxid an dem Bestimmungsort aufgetragen, wo es anschließend einem Schmelzverfahren unterzogen wird. Zur Spannungsversorgung der Halbleiterchips ist es sinnvoll, wenn die Leiterschicht Leiterbahnen umfasst, welche mit der von der Leiterschicht fort weisenden Seite des Halbleiterchips mittels mindestens einer zweiten als Bonddraht ausgebildeten elektrischen Leitung in Verbindung stehen. Für den Bonddraht ist vorzugsweise ein besonders temperaturbeständiger und bei diesen Temperaturen auch gut leitfähiger Werkstoff zu wählen, beispielsweise Gold. Zum Schutz gegen insbesondere mechanische und chemische Einflüsse von außen kann diese Anordnung bestehend aus dem Halbleiterchip und der Kontaktierung mittels des Bonddrahtes zweckmäßig mit einer Schicht aus transparentem temperaturbeständigem Kunststoff überzogen sein, beispielsweise Epoxidharz. Dieser Überzug bildet gleichzeitig eine Primäroptik, die je nach Formgebung und Gestaltung des vorzugsweise reflektierend ausgebildeten Hintergrundes, auf dem der Halbleiterchip aufliegt, eine erste Bündelung des Strahlengangs ausgehend von dem Halbleiterchip bewirkt.

Eine sehr kostengünstige und gleichzeitig technisch bevorzugte Lösung zur Zusammenfassung der einzelnen Bauelemente des Leuchtmoduls ergibt sich, wenn das Leuchtmodul eine erste Leiterplatte umfasst, auf der das Trägerelement befestigt ist. Hierbei kann die erste Leiterplatte mit einer Flachseite an dem Träger anliegen und vorzugsweise mit diesem verklebt sein. Zur Abfuhr der Verlustleistung in Form von Wärme ist es sinnvoll, wenn der Träger als Kühlkörper ausgebildet ist. Die Verbindung zwischen der ersten Leiterplatte und dem Träger sollte einerseits temperaturbeständig und andererseits gut wärmeleitend ausgebildet sein. Ein kostengünstiger Werkstoff für den als Kühlkörper ausgebildeten Träger ist Aluminium. In gleicher Weise kann das Ansteuermodul eine zweite Leiterplatte umfassen, welche mit einer Flachseite an dem Träger anliegt und ebenso befestigt werden kann.

Bei der Wahl der Lichtfarben, welche mittels der Halbleiterchips emittierbar sind, ergeben sich für die Anwendung in einem Head-Up-Display besonders zweckmäßige Kombinationen von Halbleiterchips. Ein Leuchtmodul weist hierbei vorzugsweise 1, 2, 3 oder 4 Halbleiterchips auf, was sich hinsichtlich der Verlustleistung und der erzeugten Helligkeit als besonders sinnvoll erwiesen hat.

Besonders vorteilhaft kann die bisher beschriebene Lichtquelle in sämtlichen Varianten für eine Bilderzeugungseinheit, insbesondere für ein Head-Up-Display verwendet werden.

Mit Vorteil ist der dem Lichtmodul eigenen Primäroptik in dem von der Lichtquelle ausgehenden Strahlengang eine Sekundäroptik nachgeordnet. Zweckmäßig kann diese Sekundäroptik einen Reflektor umfassen, wobei der Reflektor vorzugsweise zumindest teilweise totalreflektierend ausgebildet ist, was optische Verluste nahezu eliminiert. Eine besonders kostengünstige Lösung besteht darin, dass der Reflektor aus einem transmissiven Polymer besteht. Hierbei besitzt der Reflektor eine im Wesentlichen kegelige oder pyramidische Außenkontur, wobei sich der Querschnitt des Reflektors in Lichthauptausbreitungsrichtung zur Bündelung aufweitet. Im Einzelnen ist es zweckmäßig, wenn das aus der Primäroptik des Leuchtmoduls austretende Licht in eine Einkoppelseite des Reflektors eintritt, in dem Reflektor nahezu ausschließlich Totalreflektionen erfährt und in einem Lichtkegel aus einer Auskoppelseite austritt. Hierbei ist der Reflektor für eine Verwendung in einer erfindungsgemäßen Bilderzeugungseinheit besonders vorteilhaft ausgebildet, wenn er einen sich aufweitenden Lichtkegel abstrahlt, der eine Begrenzungsfläche aufweist, welche Begrenzungsfläche mit einer zentral durch den Lichtkegel in Lichthauptausbreitungsrichtung verlaufenden Zentralachse einen Winkel von etwa 5° bis 15° bildet. Dieses Merkmal lässt sich besser verwirklichen, wenn die Außenkontur des Reflektors konvex ist, wobei es sich als besonders zweckmäßig erwiesen hat, wenn die Außenkontur des Reflektors als sich in Lichthauptausbreitungsrichtung aufweitender Rotationsparaboloid ausgebildet ist und dem Rotationsparaboloid ein Polynom fünfter Ordnung zugrunde liegt. Die Einkoppelverluste des Reflektors lassen sich auf ein Minimum reduzieren, wenn auf der Einkoppelseite einer an dem Leuchtmodul vorgesehene Leuchtmittel zumindest teilweise aufnehmende Ausnehmung aufweist.

Ist eine zusätzliche Bündelung des eingekoppelten Lichtes gewünscht, ist es sinnvoll, wenn die Ausnehmung eine in Richtung der Zentralachse gegenüber der Lichtquelle angeordnete Stirnfläche aufweist, die in Richtung der Lichtquelle konvex gewölbt ist.

Insbesondere bei einer gewünschten flächigen Abstrahlung der Lichtquelle der Bilderzeugungseinheit ist es sinnvoll, wenn mehrere Lichtmodulen zugeordnete Reflektoren zueinander benachbart angeordnet sind. Damit es im Bereich der Übergänge zwischen den einzelnen Reflektoren nicht zu starken Unregelmäßigkeiten der Ausleuchtung kommt, ist es zweckmäßig, wenn die Reflektoren eine Auskoppelfläche aufweisen, welche ein nahezu lückenloses nebeneinander Anordnen ermöglicht, beispielsweise, wenn die Auskoppelfläche rechteckig ist. Um dennoch auftretende Inhomogenitäten der Helligkeitsverteilung über die Gesamtfläche der Auskoppelflächen der Reflektoren zu vermeiden, ist es zweckmäßig, wenn im Strahlengang nach den Reflektoren ein gemeinsames Lichtmischmodul angeordnet ist. Im Strahlengang nach dem Lichtmischmodul kann, je nach Bauraumvorgaben, direkt ein durchleuchtbares Display der Bilderzeugungseinheit angeordnet werden, oder unter Zwischenschaltung eines den Strahlengang faltenden Reflektors bzw. Spiegels. Ein derartiger Reflektor bzw. Spiegel ermöglicht zudem bei einem Head-Up-Display den Tiefeneindruck bzw. den Abstandseindruck des virtuellen Bildes zu dem Fahrer zu verstärken. Je nach Bündelungseffekt der Sekundäroptik kann die Auskoppelfläche der Sekundäroptik in etwa die Größe der zu durchleuchtenden Displayfläche aufweisen. Das sich vorzugsweise an die Sekundäroptik anschließende Lichtmischmodul kann zweckmäßig kastenartig ausgebildet sein mit einer Lichteintrittsseite und einer Lichtaustrittsseite und nach innen reflektierenden Seitenwänden. Die Länge der Erstreckung in Richtung des Strahlenganges ist je nach Stärke der Helligkeitsdifferenzen im Bereich der Auskoppelfläche der Sekundäroptik festzulegen. Etwaige Inhomogenitäten in der Helligkeit und andere aus der Lichtquelle oder der Sekundäroptik stammende visuelle Störeffekte lassen sich zusätzlich oder bei nur kleinen Differenzen auch ausschließlich mittels einer im Strahlengang zwischen dem Lichtmodul und dem Display angeordneten Streuscheibe beseitigen.

Im Folgenden ist die Erfindung anhand eines speziellen Ausführungsbeispiels zur Verdeutlichung näher beschrieben. Neben diesem Ausführungsbeispiel ergeben sich für den Fachmann aus der hier beschriebenen Erfindung zahlreiche andere Möglichkeiten der Gestaltung. Insbesondere sind der Erfindung auch Merkmalskombinationen zuzurechnen, welche sich aus Kombinationen der Ansprüche ergeben, auch wenn kein ausdrücklicher dementsprechender Rückbezug angeführt ist. Es zeigen:
- Figur 1: eine schematische, perspektivische Darstellung einer erfindungsgemäßen Bilderzeugungseinheit,
- Figur 2: eine Draufsicht auf eine schematische Darstellung eines Lichtmoduls einer erfindungsgemäßen Lichtquelle,
- Figur 3a bis 3d: Beispiele für eine Zusammenstellung verschiedener Farbkonfigurationen von Halbleiterchips eines Lichtmoduls.

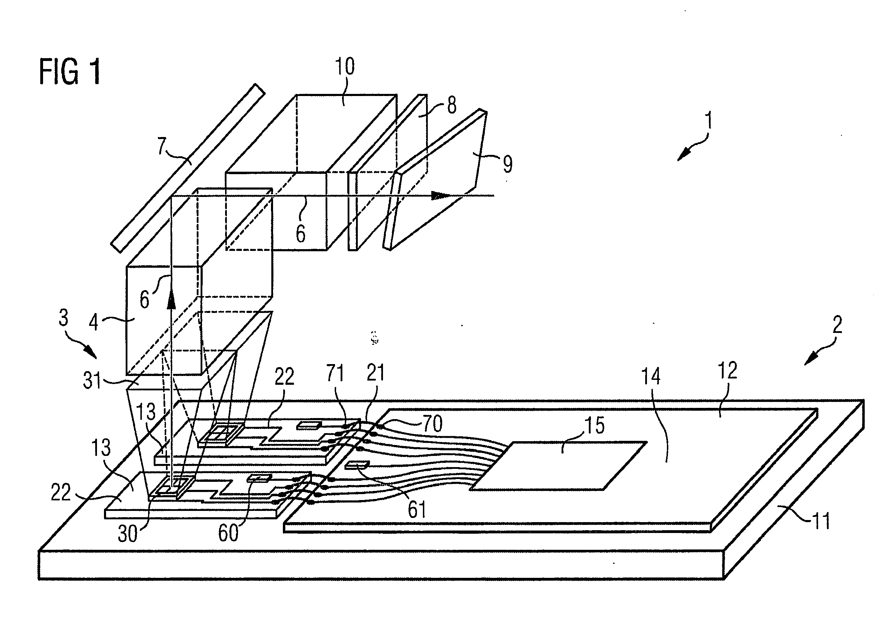

Figur 1 zeigt eine erfindungsgemäße Bilderzeugungseinheit 1 mit den wesentlichen Bestandteilen aufgeführt folgend dem von der Lichtquelle 2 ausgehenden Strahlengang 5 einer Lichthauptausbreitungsrichtung 6: Lichtquelle 2, Sekundäroptik 3, Lichtmischmodul 4, Spiegel 7, Streuscheibe 8 und Display 9, wobei zwischen dem Spiegel 7 und der Streuscheibe 8 optional, wie in hier dargestellter Weise, noch ein Lichtkasten 10 angeordnet werden kann.

Die Lichtquelle 2 besteht im Wesentlichen aus einem Träger 11, einem Ansteuermodul 12 und Leuchtmodulen 13. Der Träger 11 ist als Kühlkörper aus Aluminium ausgebildet, auf dem das Ansteuermodul 12 und die Lichtmodule 13 mit einer unbestückten Flachseite aufgeklebt sind. Die Klebung genügt hierbei jeweils hohen Ansprüchen an die Wärmeleitfähigkeit und Temperaturbeständigkeit. Das Ansteuermodul 12 weist ein als Leiterplatte ausgebildetes zweites Trägerelement 14 auf, welches mit einer stark vereinfacht dargestellten Ansteuerelektronik 15 bestückt ist. Zu dem Bestückungsumfang zählt außerdem ein Temperatursensor 16, der die Ansteuerelektronik 15 die Betriebstemperatur rückmeldet, wobei das Erreichen einer bestimmten Grenztemperatur eine Reduktion der Betriebsleistung der Leuchtmodule 13 bewirkt. Die Ansteuerelektronik 15 erhält von einer nicht dargestellten Steuereinheit pulsweitenmodulierte Signale und setzt diese in eine entsprechende Betriebsspannung für die einzelnen Leuchtmodule 13 um.

Die Leuchtmodule 13 stehen mit dem Ansteuermodul 12 mittels elektrischen ersten Leitungen 21 in Verbindung. Die elektrischen ersten Leitungen 21 sind als Bonddrähte ausgebildet, wobei sie sich bogenförmig gemäß dem Detail 2a von ersten Kontakten 70 des Ansteuermoduls 12 zu dargestellten zweiten Kontakten 71 der Leuchtmodule 13 erstrecken. Entsprechend sind die ersten und zweiten Kontakte 70, 71 für eine Verbindung zu einem Bonddraht geeignet ausgebildet. Sämtliche Bauelemente des Leuchtmoduls 13 sind an einem ersten Trägerelement 22 befestigt, welches als Printed-Circuit-Board ausgebildet ist. Auf dem ersten Trägerelement 22 der beiden Leuchtmodule 13 befindet sich jeweils ein Leuchtmittel 24, das in die Lichthauptausbreitungsrichtung 6 im Wesentlichen in die Sekundäroptik 3 einstrahlt.

Die Sekundäroptik 3 weist eine dem Leuchtmittel 24 zugewandte Einkoppelseite 30 und eine der Einkoppelseite 30 gegenüber liegende Auskoppelseite 31 auf. Entlang der Lichthauptausbreitungsrichtung 6 hat die Sekundäroptik 3 einen sich kontinuierlich aufweitenden rechteckigen Querschnitt, so dass die Auskoppelseite 31 eine größere Fläche aufweist als die Einkoppelseite 30. Die beiden dargestellten Leuchtmodule 13 sind derart beabstandet benachbart angeordnet, dass die Auskoppelseite 31 der den beiden Leuchtmodulen jeweils zugeordneten Sekundäroptiken 3 sich nahezu nahtlos aneinanderfügen. Die Sekundäroptiken 3 sind als totalreflektierende transmissive Kegelstümpfe aus einem transparenten Polymer ausgebildet.

Der sich im Strahlengang anschließende Lichtmischer besteht im Wesentlichen aus einer eine Lichteintrittsseite 40 und eine Lichtaustrittsseite 41 abgrenzenden Seitenwänden 42, wobei der sich in Lichthauptausbreitungsrichtung 6 ergebende Querschnitt des Lichtmischmoduls 4 im Wesentlichen den Abmessungen des Displays 9 entspricht.

Auf dem Ansteuermodul 12 und dem Lichtmodul (13) ist jeweils ein Temperatursensor (60, 61) in gut Wärme leitender Verbindung angeordnet. Die Temperatursensoren (60, 61) melden die lokal gemessene Temperatur an die Ansteuerelektronik (15), welche die Leistungsaufnahme in Abhängigkeit von dem Messergebnis begrenzt, so dass die zulässigen Temperaturen nicht überschritten werden.

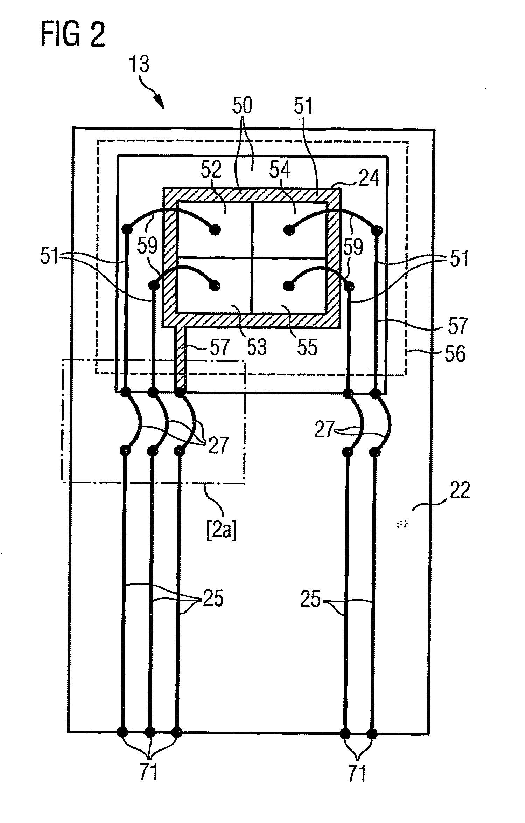

Das in Figur 2 im Detail dargestellte Leuchtmodul 13 besteht im Wesentlichen aus dem Leuchtmittel 24 und zweiten Leitungen 25, wobei das Leuchtmittel 24 und die zweiten Leitungen 25 auf dem ersten Trägerelement 22 angeordnet und befestigt sind. Das Leuchtmittel 24 steht mit den zweiten Leitungen 25 mittels im Detail [2a] dargestellter dritter Leitungen 27, welche als Bonddrähte ausgebildet sind, in elektrisch leitender Verbindung. Das Leuchtmittel 24 selbst ist auf dem als Leiterplatte ausgeführten ersten Trägerelement 22 gut wärmeleitend und temperaturbeständig aufgeklebt.

Das Leuchtmittel 24 weist ein besonders temperaturbeständiges drittes Trägerelement 50 auf, welches als Keramikplättchen aus Aluminiumoxyd (Al₂O₃) ausgebildet ist. Das dritte Trägerelement 50 ist Trägerin einer Leiterschicht 51, Halbleiterchips 52-55 und einer Primäroptik 56. Die Leiterschicht 51 besteht aus mehreren Leiterbahnen 57, die mit den zweiten Leitungen 25 in bereits erwähnter Weise mittels als Bonddrähte ausgebildeten dritten Leitungen 27 elektrisch leitend verbunden sind. Einige der Leiterbahnen 57 münden in eine unter den Halbleiterchips vorgesehene Kontaktfläche und andere in eine aus Bonddrähten bestehende Bondverbindung 59 auf die gegenüber liegende Seite der Halbleiterchips 52-55. Die Primäroptik 56 besteht aus temperaturbeständigem, transparentem Kunststoff, der gleichzeitig die Bonddrahtverbindungen 59 der Halbleiterchips 52-55 vor äußeren mechanischen oder chemischen Einflüssen schützt.

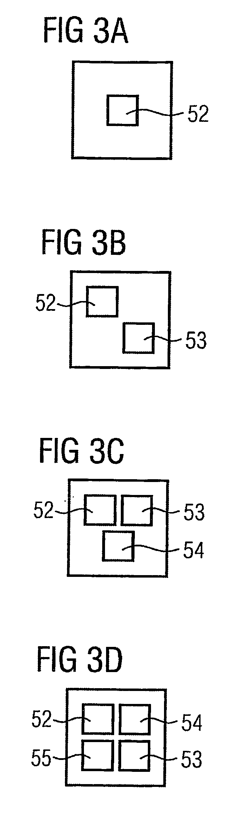

Die Figur 3 zeigt verschiedene Zusammenstellungen von Halbleiterchips 52-55, wobei Figur 3a die Anordnung eines Halbleiterchips 52 auf dem Leuchtmodul 13, die Figur 3b die Anordnung zweier Halbleiterchips 52, 53, die Figur 3c die Anordnung dreier Halbleiterchips 52-54 und die Figur 3d die Anordnung vierer Halbleiterchips 52-55 auf dem dritten Trägerelement 50 zeigt. Die dargestellten Anordnungen in Zweier, Dreier und Vierer-Gruppen sind hinsichtlich der Abstrahlcharakteristik besonders vorteilhaft. Je nach gewünschter Emissionsfarbe kann bei der in 3a dargestellten Anordnung ein Halbleiterchip 52 gewählt werden, der Licht weißer, roter, grüner oder blauer Farbe emittiert. Für die Anwendung in einem Head-Up-Display ist die Verwendung der Farben Rot und Grün von besonderem ergonomischem Vorteil, weshalb die ausschließliche Verwendung roter und grün emittierender Halbleiterchips 52, 53, 54 für die in Figuren 3b, 3c dargestellte Anordnung empfehlenswert ist. Diese Farben ermöglichen beste Ablesbarkeit bei fast allen Umgebungslichtbedingungen. Ist eine größere Farbauswahl gewünscht, kann bei Akzeptanz geringerer Helligkeit auch die Zusammenstellung Rot, Grün, Blau für drei Halbleiterchips 52-55 gewählt werden. Den Helligkeits- und Farbanforderungen im Head-Up-Display folgend, ist die die Verwendung zweier grün emittierender Halbleiterchips 52-55 bei der Anordnung dreier Halbleiterchips 52, 53, 54 gemäß Figur 3d zweckmäßig.

## Patentansprüche

1. Lichtquelle (2) mit mindestens einem Leuchtmodul (13) und einem Ansteuermodul (12) mit einer Ansteuerelektronik (15), **dadurch gekennzeichnet , dass** das Leuchtmodul (13) und das Ansteuermodul (12) jeweils ein eigenes Trägerelement (14, 22) aufweisen, das Leuchtmodul (13) ein erstes Trägerelement (22) aufweist und das Ansteuermodul (12) ein zweites Trägerelement (14) aufweist und mit einem gemeinsamen Träger (11) in zueinander befestigender Verbindung stehen, wobei das Leuchtmodul (13) mit dem Ansteuermodul (12) mittels elektrischer erster Leitungen (21) in Verbindung steht, welche derart ausgebildet sind, dass thermisch verursachte Relativbewegungen zwischen dem Ansteuermodul (12) und dem Leuchtmodul (13) von der Verformung der ersten Leitungen (21) zerstörungsfrei aufgenommen werden.

2. Lichtquelle (2) nach Anspruch 1, **dadurch** g e - **kennzeichnet,** dass die elektrischen ersten Leitungen (21) zur Verbindung des Leuchtmoduls (13) mit dem Ansteuermodul (12) als Bonddrähte ausgebildet sind.

3. Lichtquelle (2) nach Anspruch 1, **dadurch ge**- k e n n z e i c h n e t , dass das Leuchtmodul (13) mindestens einen Halbleiterchip (52, 53, 54, 55) aufweist, der auf einer Leiterschicht (51) in elektrisch leitender Verbindung mit der Leiterschicht (51) angeordnet ist.

4. Lichtquelle (2) nach Anspruch 3, **dadurch** g e - k e n n z e **ichnet**, dass der Halbleiterchip (52, 53, 54, 55) eine Leistungsaufnahme von mindestens 0,5 Watt aufweist

5. Lichtquelle (2) nach Anspruch 3, **dadurch** g e - **kennzeichnet,** dass die Leiterschicht (51) auf einem drittem Trägerelement (50) aus Keramik aufgebracht ist.

6. Lichtquelle (2) nach Anspruch 5, **dadurch g** e - k e n n z e i c h n e **t** , dass die Keramik ein Wärme leitender Hybrid ist.

7. Lichtquelle (2) nach Anspruch 6, **dadurch** g e - k e n n z e i c h n e **t** , dass die Keramik eine Aluminiumoxidkeramik ist.

8. Lichtquelle (2) nach Anspruch 5, **dadurch ge**- k e n n z e i c h n e t , dass die Keramik einen Wärmeleitkoeffizient von mindestens 5 K/W aufweist und ein elektrischer Isolator ist.

9. Lichtquelle (2) nach Anspruch 5, **dadurch** g e - k e n n z e i c h n e t , dass das dritte Trägerelement (50) an dem ersten Trägerelement (22) befestigt ist.

10. Lichtquelle (2) nach Anspruch 1, **dadurch** g e - k e n n z e i c h n e t , dass die Leiterschicht (51) zumindest teilweise aus einem Gemisch umfassend Silber und Platin besteht.

11. Lichtquelle (2) nach Anspruch 1, **dadurch ge**- k e n n z e i c h n e t , dass die Leiterschicht (51) Leiterbahnen (57) umfasst, welche mit der von der Leiterschicht (51) fort weisenden Seite des Halbleiterchips (52, 53, 54, 55) mittels mindestens einer zweiten als Bonddraht ausgebildeten elektrischen Leitung (25) in Verbindung stehen.

12. Lichtquelle (2) nach Anspruch 9, **dadurch** g e - k e n n z e i c h n e t , dass Leiterbahnen (57) der Leiterschicht (51) mittels dritter elektrischer Leitungen (27) an dem Übergang des dritten Trägerelements (50) zu Leitungen (25), welche mit dem Ansteuermodul (12) in elektrisch leitender Verbindung stehen, verbunden sind und die dritten Leitungen (27) als Bonddrähte ausgebildet sind.

13. Lichtquelle (2) nach Anspruch 1, **dadurch** g e - kennzeichnet, dass das Leuchtmodul (13) mehrere Halbleiterchips (52, 53, 54, 55) umfasst und die Leiterschicht (51) sowie die Verbindung derart ausgebildet ist, dass mindestens zwei Halbleiterchips (52, 53, 54, 55) mittels der Leiterbahnen (57) von einander unabhängig mit elektrischer Spannung beaufschlagbar sind.

14. Lichtquelle (2) nach Anspruch 1, **dadurch** g e - k e n n z e **i c h n e t ,** dass das Leuchtmodul (13) zwei Halbleiterchips (52, 53) umfasst, wobei mittels eines ersten Halbleiterchips (52) Licht in roter Farbe, mittels eines zweiten Halbleiterchips (53) Licht in grüner Farbe emittierbar ist.

15. Lichtquelle (2) nach Anspruch 1, **dadurch ge**- k e n n z e i c h n e t , dass das Leuchtmodul (13) vier Halbleiterchips (52, 53, 54, 55) umfasst, wobei mittels eines ersten und zweiten Halbleiterchips (52, 53) Licht in roter Farbe, mittels eines dritten und vierten Halbleiterchips (54, 55) Licht in grüner Farbe emittierbar ist.

16. Lichtquelle (2) nach Anspruch 1, **dadurch** g e - k e n n z e i c h n e t , dass das Leuchtmodul (13) 3 Halbleiterchips (52, 53, 54) umfasst, wobei mindestens mittels einem Licht in roter und mindestens mittels eines weiteren Licht in grüner Farbe emittierbar ist.

17. Lichtquelle (2) nach Anspruch 1, **dadurch ge**- k e n n z e i c h n e t , dass das Leuchtmodul (13) 4 Halbleiterchips (52, 53, 54, 55) umfasst, wobei mittels eines ersten und zweiten Halbleiterchips (52, 53) Licht in grüner Farbe, mittels eines dritten Halbleiterchips (54) Licht in roter Farbe mittels eines vierten Halbleiterchips (55) Licht in blauer Farbe emittierbar ist.

18. Lichtquelle (2) nach Anspruch 1, **dadurch ge**- k e n n **zeichnet,** dass das Leuchtmodul (13) eine erste Leiterplatte umfasst, auf der das dritte Trägerelement (50) befestigt ist.

19. Lichtquelle (2) nach Anspruch 18, **dadurch** g e - k e n n z e i c h n e t , dass das erste Trägerelement (22) als Leiterplatte ausgebildet ist und mit einer Flachseite an dem Träger (11) anliegt.

20. Lichtquelle (2) nach Anspruch 1, **dadurch** g e - k e n n z e **ich**ne**t** , dass der Träger (11) als Kühlkörper ausgebildet ist.

21. Lichtquelle (2) nach Anspruch 1, **dadurch** g e - **k** e n n **z** e **i c h** n e **t** , dass der Träger (11) aus Aluminium besteht.

22. Lichtquelle (2) nach Anspruch 1, **dadurch** g e - k e n n z e i c h n e t , dass das zweite Trägerelement (14) als Leiterplatte ausgebildet ist, welche mit einer Flachseite an dem Träger (11) anliegt.

23. Lichtquelle (2) nach Anspruch 1, **dadurch g** e - k e n n z e i c h n e t , dass das Leuchtmodul (13) und/oder das Ansteuermodul (12) mittels Klebstoffs an dem Träger (11) befestigt sind.

24. Lichtquelle (2) nach Anspruch 1, **dadurch** g e - k e n n z e i c h n e **t** , dass einem Ansteuermodul (12) mehrere Leuchtmodule (13) zugeordnet sind.

25. Lichtquelle (2) nach Anspruch 1, **dadurch** g e - k e n n z e i c h n e t , dass an dem Ansteuermodul (12) und/oder an dem Leuchtmodul (13) ein Temperatursensor (60, 61) angeordnet ist.

26. Bilderzeugungseinheit (1) für ein Head-Up-Display mit einer Lichtquelle (2) gemäß mindestens einem der vorhergehenden Ansprüche.

27. Bilderzeugungseinheit (1) nach Anspruch 26, d a - **d u r c h gekennzeichnet** , dass in dem von der Lichtquelle (2) ausgehenden Strahlengang (5) eine Sekundäroptik (3) nachgeordnet ist.

28. Bilderzeugungseinheit (1) nach Anspruch 26 oder 27, **dadurch gekennzeichnet , dass** die Sekundäroptik (3) einen Reflektor umfasst.

29. Bilderzeugungseinheit (1) nach mindestens einem der vorhergehenden Ansprüche 26 bis 28, **dadurch g** e - k e n n z e i c h n e t , dass der Reflektor totalreflektierend ausgebildet ist.

30. Bilderzeugungseinheit (1) nach mindestens Anspruch 29, **dadurch gekennzeichnet , dass** der Reflektor aus einem transmissiven Polymer besteht.

31. Bilderzeugungseinheit (1) nach mindestens Anspruch 29 oder 30, **dadurch gekennzeichnet , dass** der Reflektor eine im Wesentlichen kegelige oder pyramidische Außenkontur aufweist.

32. Bilderzeugungseinheit (1) nach mindestens einem der vorhergehenden Ansprüche 26 bis 31, **dadurch g** e - k e n n z e **i c h** n e **t** , dass der Reflektor eine Einkoppelseite (30), auf der Licht mindestens einer Lichtquelle (2) eintritt und eine Auskoppelseite (31), auf der eingekoppeltes Licht austritt, aufweist.

33. Bilderzeugungseinheit (1) nach mindestens einem der vorhergehenden Ansprüche 26 bis 32, **dadurch g** e - k e n n z e **i c h** n e **t** , dass der Reflektor einen sich aufweitenden Lichtkegel abstrahlt, der eine Begrenzungsfläche aufweist, welche Begrenzungsfläche mit einer zentral durch den Lichtkegel in Lichthauptausbreitungsrichtung (6) verlaufenden Zentralachse einen Winkel von etwa 5° - 15° bildet.

34. Bilderzeugungseinheit (1) nach mindestens einem der vorhergehenden Ansprüche 26 bis 33, **dadurch** g e - k e n n z e i c h n e **t** , dass die Außenkontur des Reflektors konvex ist.

35. Bilderzeugungseinheit (1) nach mindestens einem der vorhergehenden Ansprüche 26 bis 34, **dadurch** g e - k e n n z e i c h n e t , dass die Außenkontur des Reflektors als sich in Lichthauptausbreitungsrichtung (6) aufweitender Rotationsparaboloid ausgebildet ist und dem Rotationsparaboloid ein Polynom 5ter Ordnung zugrunde liegt.

36. Bilderzeugungseinheit (1) nach mindestens einem der vorhergehenden Ansprüche 26 bis 35, **dadurch g** e - k e n n **z** e **i c h** n e t , dass der Reflektor auf der Einkoppelseite eine an dem Leuchtmodul (13) vorgesehene Leuchtmittel (24) zumindest teilweise aufnehmende Ausnehmung aufweist.

37. Bilderzeugungseinheit (1) nach mindestens einem der vorhergehenden Ansprüche 26 bis 36, **dadurch g** e - k e n n z e i c h n e **t** , dass die Ausnehmung eine zylindrische, sich parallel zur Zentralachse erstreckende, seitliche Begrenzungskontur aufweist.

38. Bilderzeugungseinheit (1) nach mindestens einem der vorhergehenden Ansprüche 26 bis 37, **dadurch g** e - k e n n z e i c h n e t , dass die Ausnehmung eine in Richtung der Zentralachse gegenüber der Lichtquelle (2) angeordnete Stirnfläche aufweist, welche in Richtung der Lichtquelle (2) konvex gewölbt ist.

39. Bilderzeugungseinheit (1) nach mindestens einem der vorhergehenden Ansprüche 26 bis 38, **dadurch g** e - kennzeichnet , dass der Reflektor eine Austrittsfläche mit einem Diagonalmaß von etwa 20 mm aufweist.

40. Bilderzeugungseinheit (1) nach mindestens einem der vorhergehenden Ansprüche 26 bis 39, **dadurch g**e - k e n n z e i c h n e t , dass die Ausnehmung ein Diagonalmaß von etwa 5mm aufweist.

41. Bilderzeugungseinheit (1) nach mindestens einem der vorhergehenden Ansprüche 26 bis 40, **dadurch g** e - **k** e n n **z** e **i c h** n e **t** , dass mehrere Leuchtmodulen (13) zugeordnete Reflektoren zueinander benachbart angeordnet sind.

42. Bilderzeugungseinheit (1) nach Anspruche 41, d a-d u r c h **gekennzeichnet** , dass im Strahlengang (5) nach den Reflektoren ein gemeinsames Lichtmischmodul (3) angeordnet ist.

43. Bilderzeugungseinheit (1) nach Anspruch 42, d a - d u r c h **gekennzeichnet** dass im Anschluss an das Lichtmischmodul (3) ein durchleuchtbares Display (9) angeordnet ist.

44. Bilderzeugungseinheit (1) nach Anspruch 42 oder 43, **dadurch gekennzeichnet , dass** das Lichtmischmodul (3) kastenartig mit einer Lichteintrittseite (40) und einer Lichtaustrittseite (41) ausgebildet ist und nach innen reflektierende Seitenwände (42) aufweist.

45. Bilderzeugungseinheit (1) nach mindestens einem der Ansprüche 43 bis 44, **dadurch** g e k e n n z e **i c h** - n e t , dass im Strahlengang (5) zwischen dem Lichtmodul und dem Display mindestens ein Spiegel (7) angeordnet ist, der den Strahlengang (5) faltet.

46. Bilderzeugungseinheit (1) nach mindestens einem der Ansprüche 43 bis 45, **dadurch** g e k e n n z e i c h - n e t , dass im Strahlengang (5) zwischen dem Leuchtmodul (13) und dem Display (9) eine Streuscheibe (8) angeordnet ist.

## Claims

1. Light source (2) having at least one light module (13) and one drive module (12) with drive electronics (15), **characterized in that** the light module (13) and the drive module (12) each have their own mount element (14, 22), the light module (13) has a first mount element (22) and the drive module (12) has a second mount element (14), and are connected, attached to one another, to a common mount (11), with the light module (13) being connected to the drive module (12) by means of electrical first lines (21), which are designed in such a manner that thermally caused relative movements between the drive module (12) and the light module (13) are absorbed without destruction, by deformation of the first lines (21).

2. Light source (2) according to claim 1, **characterized in that** the electrical first lines (21) for connection of the light module (13) to the drive module (12) are in the form of bonding wires.

3. Light source (2) according to claim 1, **characterized in that** the light module (13) has at least one semiconductor chip (52, 53, 54, 55), which is arranged on a conductor layer (51), such that it is electrically conductively connected to the conductor layer (51).

4. Light source (2) according to claim 3, **characterized in that** the semiconductor chip (52, 53, 54, 55) has a power consumption of at least 0.5 watts.

5. Light source (2) according to claim 3, **characterized in that** the conductor layer (51) is applied to a third mount element (50) composed of ceramic.

6. Light source (2) according to claim 5, **characterized in that** the ceramic is a thermally conductive hybrid.

7. Light source (2) according to claim 6, **characterized in that** the ceramic is an aluminum-oxide ceramic.

8. Light source (2) according to claim 5, **characterized in that** the ceramic has a coefficient of thermal conductivity of at least 5 K/W, and is an electrical insulator.

9. Light source (2) according to claim 5, **characterized in that** the third mount element (50) is attached to the first mount element (22).

10. Light source (2) according to claim 1, **characterized in that** the conductor layer (51) is composed at least partially of a mixture comprising silver and platinum.

11. Light source (2) according to claim 1, **characterized in that** the conductor layer (51) has conductor tracks (57) which are connected to that face of the semiconductor chip (52, 53, 54, 55) which points away from the conductor layer (51) by means of at least one second electrical line (25), which is in the form of a bonding wire.

12. Light source (2) according to claim 9, **characterized in that** conductor tracks (57) on the conductor layer (51) are connected by means of third electrical lines (27) to the junction between the third mount element (50) and lines (25) which are electrically conductively connected to the drive module (12) and the third lines (27) are in the form of bonding wires.

13. Light source (2) according to claim 1, **characterized in that** the light module (13) has a plurality of semiconductor chips (52, 53, 54, 55), and the conductor layer (51) as well as the connection are designed in such a manner that at least two semiconductor chips (52, 53, 54, 55) can have an electrical voltage applied to them, independently of one another, by means of the conductor tracks (57).

14. Light source (2) according to claim 1, **characterized in that** the light module (13) has two semiconductor chips (52, 53), in which case red-colored light can be emitted by means of a first semiconductor chip (52), and green-colored light can be emitted by means of a second semiconductor chip (53).

15. Light source (2) according to claim 1, **characterized in that** the light module (13) has four semiconductor chips (52, 53, 54, 55), in which case red-colored light can be emitted by means of a first and a second semiconductor chip (52, 53), and green-colored light can be emitted by means of a third and a fourth semi-conductor chip (54, 55).

16. Light source (2) according to claim 1, **characterized in that** the light module (13) has three semiconductor chips (52, 53, 54), in which case red-colored light can be emitted by means of at least one semiconductor chip, and green-colored light can be emitted by means of at least one further semiconductor chip.

17. Light source (2) according to claim 1, **characterized in that** the light module (13) has four semiconductor chips (52, 53, 54, 55), in which case green-colored light can be emitted by means of a first and a second semiconductor chip (52, 53), red-colored light can be emitted by means of a third semiconductor chip (54) and blue-colored light can be emitted by means of a fourth semiconductor chip (55).

18. Light source (2) according to claim 1, **characterized in that** the light module (13) has a first printed circuit board, on which the third mount element (50) is mounted.

19. Light source (2) according to claim 18, **characterized in that** the first mount element (22) is in the form of a printed circuit board and has one flat face which rests on the mount (11).

20. Light source (2) according to claim 1, **characterized in that** the mount (11) is in the form of a heat sink.

21. Light source (2) according to claim 1, **characterized in that** the mount (11) is composed of aluminum.

22. Light source (2) according to claim 1, **characterized in that** the second mount element (14) is in the form of a printed circuit board, which has one flat face which rests on the mount (11).

23. Light source (2) according to claim 1, **characterized in that** the light module (13) and/or the drive module (12) are/is attached to the mount (11) by means of adhesive.

24. Light source (2) according to claim 1, **characterized in that** a drive module (12) is associated with a plurality of light modules (13).

25. Light source (2) according to claim 1, **characterized in that** a temperature sensor (60, 61) is arranged on the drive module (12) and/or on the light module (13).

26. Image-production unit (1) for a head-up display having a light source (2) according to at least one of the preceding claims.

27. Image-production unit (1) according to claim 26, **characterized in that** secondary optics (3) are arranged downstream in the beam path (5) which originates from the light source (2).

28. Image-production unit (1) according to claim 26 or 27, **characterized in that** the secondary optics (3) comprise a reflector.

29. Image-production unit (1) according to one of the preceding claims 26 to 28, **characterized in that** the reflector is designed to be totally reflective.

30. Image-production unit (1) according to at least claim 29, **characterized in that** the reflector is composed of a transmissive polymer.

31. Image-production unit (1) according to at least claim 29 or 30, **characterized in that** the reflector has an external contour essentially in the form of a cone or pyramid.

32. Image-production unit (1) according to at least one of the preceding claims 26 to 31, **characterized in that** the reflector has an input side (30) on which light from at least one light source (2) enters, and an output side (31), on which input light emerges.

33. Image-production unit (1) according to at least one of the preceding claims 26 to 32, **characterized in that** the reflector emits a widening light beam which has a boundary surface, which boundary surface forms an angle of about 5°-15° with a central axis which runs centrally through the light beam in the main light propagation direction (6).

34. Image-production unit (1) according to at least one of the preceding claims 26 to 33, **characterized in that** the external contour of the reflector is convex.

35. Image-production unit (1) according to at least one of the preceding claims 26 to 34, **characterized in that** the external contour of the reflector is in the form of a rotational paraboloid which widens in the main light propagation direction (6), and the rotational paraboloid is based on a fifth-order polynomial.

36. Image-production unit (1) according to at least one of the preceding claims 26 to 35, **characterized in that** the reflector has a recess, which is provided on the light module (13) and at least partially holds light means (24), on the input side.

37. Image-production unit (1) according to at least one of the preceding claims 26 to 36, **characterized in that** the recess has a cylindrical side boundary contour, which extends parallel to the central axis.

38. Image-production unit (1) according to at least one of the preceding claims 26 to 37, **characterized in that** the recess has an end surface which is arranged opposite the light source (2) in the direction of the central axis and has convex curvature in the direction of the light source (2).

39. Image-production unit (1) according to at least one of the preceding claims 26 to 38, **characterized in that** the reflector has an outlet area with a diagonal size of about 20 mm.

40. Image-production unit (1) according to at least one of the preceding claims 26 to 39, **characterized in that** the recess has a diagonal size of about 5 mm.

41. Image-production unit (1) according to at least one of the preceding claims 26 to 40, **characterized in that** a plurality of reflectors which are associated with light modules (13) are arranged adjacent to one another.

42. Image-production unit (1) according to claim 41, **characterized in that** a common light-mixing module (3) is arranged downstream from the reflectors in the beam path (5).

43. Image-production unit (1) according to claim 42, **characterized in that** a translucent display (9) is arranged downstream from the light-mixing module (3).

44. Image-production unit (1) according to claim 42 or 43, **characterized in that** the light-mixing module (3) is in the form of a box with a light inlet side (40) and a light outlet side (41), and has side walls (42) which reflect inward.

45. Image-production unit (1) according to at least one of claims 43 or 44, **characterized in that** at least one mirror (7) is arranged in the beam path (5) between the light module and the display, and folds the beam path (5).

46. Image-production unit (1) according to at least one of claims 43 to 45, **characterized in that** a scattering disk (8) is arranged in the beam path (5) between the light module (13) and the display (9).

## Revendications

1. Source lumineuse (2) comportant au moins un module lumineux (13) et un module de commande (12) avec un système électronique de commande (15), **caractérisée par le fait que** le module lumineux (13) et le module de commande (12) ont chacun un organe support particulier (14, 22), que le module lumineux (13) a un premier organe support (22) et le module de commande (12), un deuxième organe support (14) et qu'ils ont entre eux un lien consolidant comportant un support commun (11), le module lumineux (13) étant relié au module de commande (12) au moyen de premiers conducteurs électriques (21), qui sont conçus de telle manière que des mouvements relatifs causés par des effets thermiques entre le module de commande (12) et le module lumineux (13) sont absorbés par la déformation des premiers conducteurs (21) sans les détruire.

2. Source lumineuse (2) selon la revendication 1, **caracté**- r i s é e p a r le f a i t que les premiers conducteurs électriques (21) servant à la liaison entre le module lumineux (13) et le module de commande (12) sont des fils souples.

3. Source lumineuse (2) selon la revendication 1, **caracté**- r i s **é** e p a r l e f a i t que le module lumineux (13) a au moins une puce à semi-conducteur (52, 53, 54, 55), qui est placée sur une couche conductive (51) tout en étant en liaison électrique avec la couche conductive (51).

4. Source lumineuse (2) selon la revendication 3, c a r a c t **é** - r i s é e p a r le f a i t que la puce à semi-conducteur (52, 53, 54, 55) absorbe une puissance d'au moins 0,5 watt.

5. Source lumineuse (2) selon la revendication 3, c a r a c t **é** - r i s é e p a r l e f a i t que la couche conductive (51) est apportée sur un troisième organe support (50) en céramique.

6. Source lumineuse (2) selon la revendication 5, c a r a c t **é** - r i s é e p a r le f a i t que la céramique est un hybride thermo-conducteur.

7. Source lumineuse (2) selon la revendication 6, c a r a c t **é** - r i s é e p a r le f a i t que la céramique est une céramique à oxyde d'aluminium.

8. Source lumineuse (2) selon la revendication 5, c a r a c t é - risée par le fait que la céramique a un coefficient de conductibilité thermique de au moins 5 K/W et est un isolateur électrique.

9. Source lumineuse (2) selon la revendication 5, caracté- r i s é e p a r le f a i t que le troisième organe support (50) est fixé au premier organe support (22).

10. Source lumineuse (2) selon la revendication 1, c a r a c t é - r i s é e p a r le f a i t que la couche conductive (51) se compose au moins en partie d'un mélange comprenant de l'argent et du platine.

11. Source lumineuse (2) selon la revendication 1, c a r a c t é - r i s é e p a r le f a i t que la couche conductive (51) comprend des pistes conductives (57), qui sont en liaison, au moyen d'au moins un deuxième conducteur électrique (25) en fil souple, avec le côté de la puce à semi-conducteur (52, 53, 54, 55) opposé à la couche conductive (51).

12. Source lumineuse (2) selon la revendication 9, c a r a c t é - r i s é e p a r le fait que des pistes conductives (57) de la couche conductive (51) sont reliées, au moyen de troisièmes conducteurs électriques (27), à la transition entre le troisième organe porteur (50) et des conducteurs (25), lesquels sont en liaison électrique avec le module de commande (12) et que les troisièmes conducteurs (27) sont en fil souple.

13. Source lumineuse (2) selon la revendication 1, c a r a c t é - r i s é e p a r le fait que le module lumineux (13) comprend plusieurs puces à semi-conducteur (52, 53, 54, 55) et que la couche conductive (51), ainsi que la liaison, sont conçues de manière telle que au moins deux puces à semi-conducteur (52, 53, 54, 55) peuvent être mises sous tension électrique indépendamment l'une de l'autre au moyen des pistes conductives (57).

14. Source lumineuse (2) selon la revendication 1, caracté- r i s é e p a r l e fait que le module lumineux (13) comprend deux puces à semi-conducteur (52, 53), de la lumière de couleur rouge pouvant être émise au moyen d'une première puce à semi-conducteur (52) et de la lumière de couleur verte pouvant être émise au moyen d'une deuxième puce à se- mi-conducteur (53).

15. Source lumineuse (2) selon la revendication 1, caracté- r i s é e p a r le fait que le module lumineux (13) comprend quatre puces à semi-conducteur (52, 53, 54, 55), de la lumière de couleur rouge pouvant être émise au moyen d'une première et d'une deuxième puce à semi-conducteur (52, 53) et de la lumière de couleur verte pouvant être émise au moyen d'une troisième et d'une quatrième puce à semi-conducteur (54, 55).

16. Source lumineuse (2) selon la revendication 1, c a r a c t é - r i s é e p a r le fait que le module lumineux (13) comprend 3 puces à semi-conducteur (52, 53, 54), de la lumière de couleur rouge pouvant être émise au moyen de au moins une puce à semi-conducteur et de la lumière de couleur verte pouvant être émise au moins au moyen d'une autre puce à semi-conducteur.

17. Source lumineuse (2) selon la revendication 1, **caractérisée par le fait que** le module lumineux (13) comprend 4 puces à semi-conducteur (52, 53, 54, 55), de la lumière de couleur verte pouvant être émise au moyen d'une première et d'une deuxième puce à semi-conducteur (52, 53), de la lumière de couleur rouge pouvant être émise au moyen d'une troisième puce à semi-conducteur (54) et de la lumière de couleur bleue pouvant être émise au moyen d'une quatrième puce à semi-conducteur (55).

18. Source lumineuse (2) selon la revendication 1, caracté- r i s é e p a r le fait que le module lumineux (13) comprend une première carte à circuits imprimés sur laquelle est fixé le troisième organe support (50).

19. Source lumineuse (2) selon la revendication 18, carac- t é r i s é e p a r le f a i t que le premier organe support (22) est une carte à circuits imprimés et qu'il s'applique par une face plate sur le support (11).

20. Source lumineuse (2) selon la revendication 1, caracté- r i s é e p a r le f a i t que le support (11) est conçu sous forme de radiateur.

21. Source lumineuse (2) selon la revendication 1, c a r a c t é - risée par le fait que le support (11) est en aluminium.

22. Source lumineuse (2) selon la revendication 1, caracté- r i s é e p a r le f a i t que le deuxième organe support (14) est une carte à circuits imprimés qui s'applique par une face plate sur le support (11).

23. Source lumineuse (2) selon la revendication 1, caracté- r i s é e p a r le fait que le module lumineux (13) et/ou le module de commande (12) sont fixés au support (11) au moyen d'une colle.

24. Source lumineuse (2) selon la revendication 1, caracté- r i s é e p a r le f a i t que plusieurs modules lumineux (13) sont affectés à un module de commande (12).

25. Source lumineuse (2) selon la revendication 1, c a r a c t é - r i s é e p a r le f a i t qu'un capteur de température (60, 61) est placé sur le module de commande (12) et/ou sur le module lumineux (13).

26. Unité de génération d'images (1) pour un affichage tête haute ou visualisation tête haute VTH, comportant une source lumineuse (2) conforme à au moins l'une des revendications précédentes.

27. Unité de génération d'images (1) selon la revendication 26, **caractérisée** p a r le f a i t qu'une optique secondaire (3) est placée sur la trajectoire (5) du faisceau lumineux partant de la source lumineuse (2).

28. Unité de génération d'images (1) selon la revendication 26 ou 27, **caractérisée** p a r le f a i t que l'optique secondaire (3) comprend un réflecteur.

29. Unité de génération d'images (1) selon au moins l'une des revendications 26 à 28, **caractérisée par le fait que** le réflecteur a une réflexion totale.

30. Unité de génération d'images (1) selon au moins la revendication 29, **caractérisée** p a r le fait que le réflecteur est en polymère transmissif.

31. Unité de génération d'images (1) selon au moins la revendication 29 ou 30, **caractérisée** p a r le f a i t que le réflecteur a un contour extérieur essentiellement conique ou pyramidal.

32. Unité de génération d'images (1) selon au moins l'une des revendications précédentes 26 à 31, c a r a c t é r i s é e p a r le f a i t que le réflecteur a un côté injection (30), sur lequel arrive de la lumière provenant de au moins une source lumineuse (2), et un côté sortie (31), duquel sort la lumière injectée.

33. Unité de génération d'images (1) selon au moins l'une des revendications précédentes 26 à 32, c a r a c t é r i s é e p a r le f a i t que le réflecteur émet un cône lumineux s'élargissant, qui a une surface périphérique formant, avec un axe central traversant le centre du cône lumineux dans la direction principale (6) de propagation de la lumière, un angle de environ 5° - 15°.

34. Unité de génération d'images (1) selon au moins l'une des revendications précédentes 26 à 33, c a r a c t é r i s é e p a r le f a i t que le contour extérieur du réflecteur est convexe.

35. Unité de génération d'images (1) selon au moins l'une des revendications précédentes 26 à 34, c a r a c t é r i s é e p a r le f a i t que le contour extérieur du réflecteur est un paraboloïde de rotation s'élargissant dans la direction principale (6) de propagation de la lumière et que la base du paraboloïde de rotation est un polynôme de cinquième ordre.

36. Unité de génération d'images (1) selon au moins l'une des revendications précédentes 26 à 35, c a r a c t é r i s é e p a r le fait que le réflecteur a, sur le côté injection, un évidement accueillant au moins partiellement des organes lumineux (24) prévus sur le module lumineux (13).

37. Unité de génération d'images (1) selon au moins l'une des revendications précédentes 26 à 36, c a r a c t é r i s é e p a r le f a i t que l'évidement a un contour latéral périphérique cylindrique se développant parallèlement à l'axe central.

38. Unité de génération d'images (1) selon au moins l'une des revendications précédentes 26 à 37, c a r a c t é r i s é e p a r le fait que l'évidement a une surface frontale disposée dans la direction de l'axe central en face de la source lumineuse (2) et que ladite surface frontale est bombée et convexe dans la direction de la source lumineuse (2).

39. Unité de génération d'images (1) selon au moins l'une des revendications précédentes 26 à 38, **caractérisée** p a r le f a i t que le réflecteur a une surface de sortie ayant une dimension diagonale de environ 20 mm.

40. Unité de génération d'images (1) selon au moins l'une des revendications précédentes 26 à 39, **caractérisée** p a r le f a i t que l'évidement a une dimension diagonale de environ 5 mm.

41. Unité de génération d'images (1) selon au moins l'une des revendications précédentes 26 à 40, **caractérisée** p a r le fait que plusieurs réflecteurs correspondant à des modules lumineux (13) sont disposés les uns à côté des autres.

42. Unité de génération d'images (1) selon la revendication 41, c a r a c t é r i s é e p a r l e f a i t qu'un module mélangeur de lumière (3) commun est placé sur la trajectoire (5) du faisceau lumineux derrière les réflecteurs.

43. Unité de génération d'images (1) selon la revendication 42, c a r a c t é r i s é e p a r le f a i t qu'un écran éclairé par transparence est placé après le module mélangeur de lumière (3).

44. Unité de génération d'images (1) selon la revendication 42 ou 43, **caractérisée** p a r 1 e f a i t que le module mélangeur de lumière (3) est en forme de boite avec un côté injection de la lumière (40) et un côté sortie de la lumière (41) et des parois latérales (42) réfléchissant vers l'intérieur.

45. Unité de génération d'images (1) selon au moins l'une des revendications 43 à 44, **caractérisée** p a r le f a i t que au moins un miroir (7), qui change la direction de la trajectoire (5) du faisceau lumineux, est disposé, sur la trajectoire (5) du faisceau lumineux, entre le module lumineux et l'écran.

46. Unité de génération d'images (1) selon au moins l'une des revendications 43 à 45, **caractérisée par le fait qu'**un disque de dispersion (8) est disposé, sur la trajectoire (5) du faisceau lumineux, entre le module lumineux (13) et l'écran (9).
